# EUROPÄISCHE PATENTSCHRIFT

(11) **EP 2 013 456 B1**
(45) Veröffentlichungstag und Bekanntmachung des Hinweises auf die Patenterteilung: **13.10.2010**
(21) Anmeldenummer: 07726666.6
(22) Anmeldetag: 07.03.2007
(51) Int. Cl.: F01N 3/20, B01D 53/94

(54) **VORRICHTUNG ZUR ZUFUHR EINES REDUKTIONSMITTELS IN EINEN ABGASSTRANG EINER VERBRENNUNGSKRAFTMASCHINE**
DEVICE FOR SUPPLYING A REDUCING AGENT INTO AN EXHAUST STRAND OF AN INTERNAL COMBUSTION ENGINE
DISPOSITIF POUR ACHEMINER UN AGENT REDUCTEUR DANS UNE BRANCHE DE GAZ D'ECHAPPEMENT D'UN MOTEUR A COMBUSTION INTERNE

(30) Priorität: 25.04.2006 DE 102006019051
(43) Veröffentlichungstag der Anmeldung: 14.01.2009
(73) Patentinhaber: Robert Bosch GmbH, 70442 Stuttgart (DE)
(72) Erfinder: BUERGLIN, Markus, 71254 Ditzingen (DE); HEILIG, Dirk, 71254 Ditzingen (DE)
(86) Internationale Anmeldenummer: PCT/EP2007/052108
(87) Internationale Veröffentlichungsnummer: WO 2007/122035

(56) Entgegenhaltungen:
- EP-A1- 1 388 648
- WO-A-03/033111
- WO-A-2006/040086
- WO-A-2006/074833
- DE-A1-102004 030 441
- DE-C1- 19 743 302
- US-A1- 2004 093 856

## Beschreibung

Die Erfindung betrifft eine Vorrichtung zur Zufuhr eines Reduktionsmittels, insbesondere eines Harnstoff-Wasser-Gemischs, in einen Abgasstrang einer Verbrennungskraftmaschine.

Bei der selektiven katalytischen Reduktion oder SCR (Selective Catalytic Reduction) wird zur Verminderung des Stickoxidanteils im Abgas von Dieselmotoren zumeist eine gemeinhin auch als AdBlue bezeichnete Harnstoff-Wasser-Lösung in den Abgasstrang zugeführt. Der Harnstoff der eingedüsten Lösung wird im Abgasstrang zu Ammoniak (NH₃) umgesetzt, das die im Abgas enthaltenen Stickoxide (NOₓ) in einem nachgeschalteten SCR-Katalysator unter Bildung von molekularem Stickstoff (N₂) und Wasser (H₂O) reduziert. Da die Stickoxide (NOₓ) auf diese Weise nahezu vollständig aus dem Abgas entfernt werden können, lassen sich Dieselmotoren mit einem relativ mageren Gemisch betreiben, was wiederum einen kraftstoffsparenden Betrieb der Motoren ermöglicht. Die Verwendung anderer Reduktionsmittel ist jedoch ebenfalls denkbar.

### Stand der Technik

Bei bekannten Vorrichtungen der eingangs genannten Art, mit denen als Reduktionsmittel ein Harnstoff-Wasser-Gemisch in den Abgasstrang zugeführt wird, erfolgt die Zufuhr entweder mittels einer Förderpumpe ohne Mengenzumessfunktion oder mittels einer Dosierpumpe. Dabei besitzen die zuerst genannten Förderpumpen gegenüber den Dosierpumpen den Vorteil, dass sie nicht nur chemisch beständiger gegen den Harnstoff bzw. freies Ammoniak im Harnstoff-Wasser-Gemisch sind, sondern im Falle eines Gefrierens des Harnstoff-Wasser-Gemischs auch den durch seine Volumenausdehnung bewirkten Eisdruck ohne Schäden aushalten können, was bei den zuletzt genannten Dosierpumpen nicht gewährleistet ist.

Ausgehend hiervon liegt der Erfindung die Aufgabe zugrunde, eine Vorrichtung der eingangs genannten Art dahingehend zu verbessern, dass sie nicht nur gegen Reduktionsmittel oder deren Bestandteile beständig und bei wasserhaltigen Reduktionsmitteln eisdruckfest ist, sondern auch eine Mengenzumessung gestattet.

In der WO 03/003111 A2 wird das Reduktionsmittel mit Hilfe einer Reduktionsmittelpumpe zu einem Dosierventil gefördert und in eine Mischkammer eingedüst, wo es mit Luft gemischt wird. Das Gemisch wird aus der Mischkammer unter Druck über eine Gemischleitung dem Abgas des Brennleraftmaschine zugeführt.

### Offenbarung der Erfindung

Zur Lösung dieser Aufgabe wird erfindungsgemäß eine Vorrichtung zur zufuhr eines Reduktionsmittels mit den Merkmalen des Oberbegriffs des Anspruchs 1 vorgeschtagen, zwischen der Förderpumpe und dem Abgasstrang eine zusätzliche Zumesseinrichtung vorzusehen, die von der Förderpumpe kontinuierlich gefördertes Reduktionsmittel zeitweilig in den Abgasstrang zuführt und damit die Mengenzumessfunktion übernimmt. Diese Lösung erlaubt es zum einen, bewährte herkömmliche Förderpumpen ohne Mengenzumessfunktion zu verwenden, die nicht nur kostengünstig erhältlich, sondern auch gegen Reduktionsmittel, wie ein Harnstoff-Wasser-Gemisch, beständig und eisdruckfest sind. Zum anderen kann die Förderpumpe während der gesamten Betriebsdauer der Verbrennungskraftmaschine arbeiten, womit auf eine Steuerung der Pumpe verzichtet werden kann, was nicht nur zu Kosteneinsparungen führt, sondern infolge des robusteren Aufbaus derartiger Förderpumpen auch eine geringere Störanfälligkeit gewährleistet. Außerdem kann die Förderpumpe gegebenenfalls auch direkt von der Verbrennungskraftmaschine angetrieben werden.

Um für eine möglichst homogene Verteilung des Reduktionsmittels im Abgas zu sorgen, wird das Reduktionsmittel mittels einer Einspritzdüse in den Abgasstrang eingedüst. Um das Erfordernis einer zusätzlichen Steuerung für die Düse zu vermeiden, wird diese zweckmäßig durch den Druck des Reduktionsmittels vor der Düse gesteuert, wobei sie sich öffnet, wenn dieser Druck einen bestimmten Öffnungsdruck übersteigt, und sich schließt, wenn der Druck unter den Öffnungsdruck absinkt. Zur Steuerung des Drucks des Reduktionsmittels vor der Düse dient die Zumesseinrichtung, welche gemäß der Erfindung die Druckseite der Pumpe mit einer Saugseite der Pumpe verbindet, wenn kein Reduktionsmittel in den Abgasstrang zugeführt werden soll, und welche die Druckseite der Pumpe von der Saugseite trennt, wenn zum Zweck einer Zufuhr von Reduktionsmittel in den Abgasstrang ein Druck vor der Düse aufgebaut werden soll.

Wenn die Druckseite der Pumpe mit der Saugseite der Pumpe verbunden ist, fördert diese letztere das Reduktionsmittel im Kreislauf. Dies bedeutet, dass sich vor der Düse kein ausreichender Druck aufbauen kann, der den Öffnungsdruck der Düse übersteigt, und dass somit die Düse geschlossen bleibt. Wenn hingegen die Druckseite der Pumpe von ihrer Saugseite getrennt ist, baut sich durch die kontinuierliche Förderung der Pumpe automatisch ein den Öffnungsdruck der Düse übersteigender Druck vor der Düse auf, so dass sich diese öffnet und für eine Zufuhr von Reduktionsmittel in den Abgasstrang sorgt.

Die Zumesseinrichtung ist entlang von einer die Pumpe mit der Düse verbindenden Druckleitung sowie entlang von einer die Pumpe mit dem Vorratsbehälter verbindenden Saugleitung angeordnet und umfasst einen die Druckleitung und die Saugleitung verbindenden Rückströmkanal, der durch ein steuerbares Ventil nach Bedarf geöffnet oder verschlossen werden kann.

Das Ventil ist vorteilhaft als Magnetventil ausgebildet und weist ein Ventilglied auf, das durch die Kraft einer Feder gegen einen Ventilsitz im Rückströmkanal angepresst wird, um diesen zu verschließen. Durch Stromzufuhr zum Magnetventil wird das Ventilglied vom Ventilsitz abgehoben, um den Rückströmkanal zu öffnen.

Da zumindest einige der Bauteile von Magnetventilen, wie die Spule und die Stromzuführungen zur Spule, nicht gegen übliche Reduktionsmittel, wie ein Harnstoff-Wasser-Gemisch bzw. aus diesem letzteren ausgasendes Ammoniak beständig sind, sollten diese Bauteile nicht mit dem Reduktionsmittel, wie dem Harnstoff-Wasser-Gemisch, oder dessen Bestandteilen oder Zersetzungsprodukten, wie Ammoniak, in Berührung kommen, um eine Korrosion und dadurch bedingte Betriebsstörungen zu vermeiden. Aus diesem Grund ist vorzugsweise eine vom Ventilglied durchsetzte Öffnung zwischen einem Spulenraum des Magnetventils und dem Rückströmkanal um das Ventilglied herum durch eine elastisch verformbare Membran hermetisch verschlossen.

Um die Zumesseinrichtung eisdruckbeständig zu machen, so dass sie infolge einer Volumenausdehnung von gefrierendem Reduktionsmittel, wie einem Harnstoff-Wasser-Gemisch, in der Zumesseinrichtung nicht beschädigt wird, sind die Druckleitung und/oder die Saugleitung innerhalb der Zumesseinheit mindestens teilweise von elastisch verformbaren Kompressionskörpern umgeben, die bei der durch das Gefrieren bedingten Volumenausdehnung des Reduktionsmittels zusammengedrückt werden und auf diese Weise für eine deutliche Absenkung des Gefrierdrucks sorgen.

### Kurze Beschreibung der Zeichnungen

Im folgenden wird die Erfindung anhand eines in der Zeichnung dargestellten Ausführungsbeispiels näher erläutert. Es zeigen:
Fig. 1: eine schematische Darstellung einer erfindungsgemäßen Vorrichtung zur Zufuhr eines Reduktionsmittels in Form eines Harnstoff-Wasser-Gemischs in einen Abgasstrang einer Verbrennungskraftmaschine;
Fig. 2: eine vergrößerte und teilweise geschnittene Darstellung des Ausschnitts II in Fig. 1.

### Ausführungsform der Erfindung

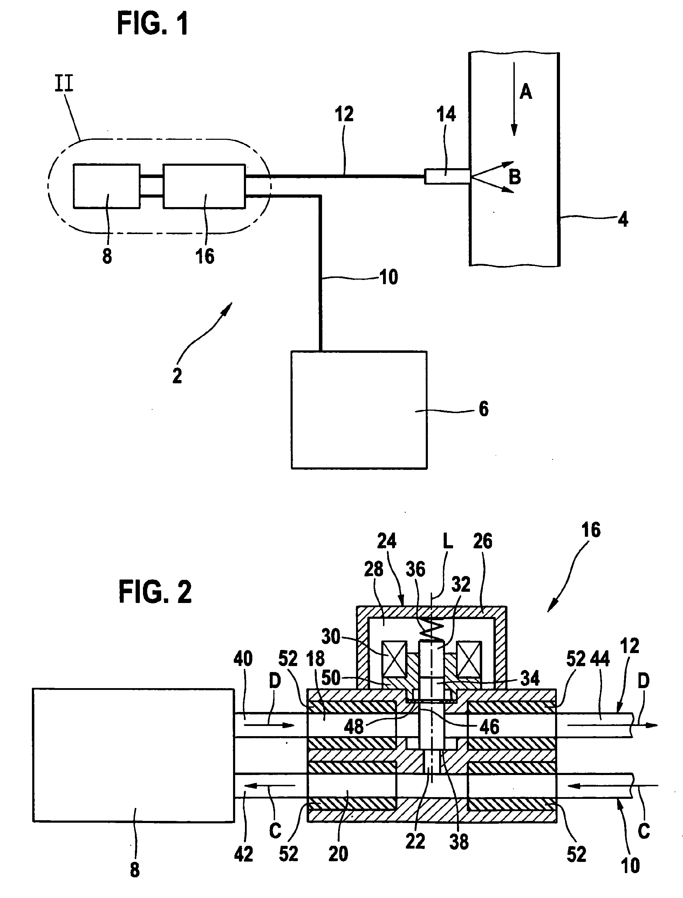

Die als Ganzes in Fig. 1 dargestellte Vorrichtung 2 dient zur Zufuhr eines Reduktionsmittels in ein in Richtung des Pfeils A vom Abgas eines Dieselmotors (nicht dargestellt) durchströmtes Abgasrohr 4. Das zugeführte Reduktionsmittel ist bevorzugt ein Harnstoff-Wasser-Gemisch (AdBlue), jedoch können auch andere Reduktionsmittel verwendet werden, insbesondere flüssige Reduktionsmittel. Die Vorrichtung 2 besteht im Wesentlichen aus einem Vorratsbehälter 6 für das Reduktionsmittel, einer herkömmlichen kontinuierlich arbeitenden Förderpumpe 8 für ein flüssiges Reduktionsmittel, wie ein Harnstoff-Wasser-Gemisch, deren Saugseite durch eine Saugleitung 10 mit dem Vorratsbehälter 6 verbunden ist und deren Druckseite durch eine Druckleitung 12 mit einer am Abgasrohr 4 angebrachten Einspritzdüse 14 verbunden ist, sowie einer Zumesseinheit 16 zur zeitweiligen Zumessung des von der Förderpumpe 8 geförderten Reduktionsmittels durch die Einspritzdüse 14 in das Abgasrohr 4.

Bei der Einspritzdüse 14, die das Reduktionsmittel zur besseren Durchmischung mit dem Abgas als Sprühkegel in das Abgasrohr 4 eindüst, wie in Fig. 1 schematisch durch Pfeile B dargestellt, handelt es sich um eine druckgesteuerte Düse, die sich öffnet, wenn der Druck in der Druckleitung 12 vor der Düse 14 einen voreingestellten Öffnungsdruck der Düse 14 übersteigt. Solange jedoch der Druck in der Druckleitung 12 vor der Düse 14 unter dem Öffnungsdruck der Düse 14 liegt, bleibt diese geschlossen.

Wie am besten in Fig. 2 dargestellt, verläuft sowohl die von der Förderpumpe 8 zur Einspritzdüse 14 führende Druckleitung 12 als auch die vom Vorratsbehälter 6 zur Förderpumpe 8 führende Saugleitung 12 durch die Zumesseinheit 16, wobei innerhalb der Zumesseinheit 16 angeordnete Leitungsabschnitte 18, 20 der Druckleitung 12 und der Saugleitung 10 zweckmäßig parallel zueinander ausgerichtet sind. Diese Leitungsabschnitte 18, 20 sind innerhalb der Zumesseinheit 16 durch einen Rückströmkanal 22 verbunden, der mit Hilfe eines Magnetventils 24 der Zumesseinheit 16 wahlweise geöffnet oder geschlossen werden kann.

Das Magnetventil 24 umfasst ein Gehäuse 26, eine in einem Spulenraum 28 des Gehäuses 26 untergebrachte, durch Stromzuführungen (nicht dargestellt) mit Strom beaufschlagbare Spule 30, einen von der Spule 30 umgebenen und entlang einer Längsachse L der Spule 30 beweglichen Magnetanker 32, ein starr mit dem Magnetanker 32 verbundenes Ventilglied 34 in Form einer Ventilnadel, sowie eine Schraubendruckfeder 36, die zwischen dem Gehäuse 26 und dem vom Ventilglied 34 abgewandten Stirnende des Magnetankers 32 angeordnet ist.

In Fig. 2 ist zur Vereinfachung der Zeichnung die Druckleitung 12 oberhalb von der Saugleitung 10 und das Magnetventil 24 oberhalb von der Druckleitung dargestellt, während in der Praxis vorzugsweise die Druckleitung 12, die Saugleitung 10 und der Rückströmkanal 22 in einer Ebene nebeneinander liegen und das Magnetventil 24 außerhalb dieser Ebene oberhalb oder unterhalb des Rückströmkanals 22 angeordnet ist.

In stromlosem Zustand der Spule 30 drückt die Druckfeder 36 das Ventilglied 34 gegen einen Ventilsitz 38 im Rückströmkanal 22, um diesen letzteren zu verschließen, während eine Stromzufuhr zur Spule 30 bewirkt, dass der Magnetanker 32 entgegen der Kraft der Druckfeder 36 in Richtung der Längsachse L der Spule 30 verschoben und dadurch das Ventilglied 34 unter Öffnen des Rückströmkanals 22 vom Ventilsitz 38 abgehoben wird.

Bei geöffnetem Rückströmkanal 22 fördert die Förderpumpe 8 aus dem Vorratsbehälter angesaugtes Reduktionsmittel im Kreislauf durch einen die Druckseite der Förderpumpe 8 mit dem Rückströmkanal 22 in der Zumesseinheit 16 verbindenden Leitungsabschnitt 40 der Druckleitung 12, den Rückströmkanal 22, sowie einen den Rückströmkanal 22 mit der Saugseite der Förderpumpe verbindenden Leitungsabschnitt 42 der Saugleitung 10, so dass sich in dem an die Zumesseinheit 16 anschließenden, zur Einspritzdüse 14 führenden Leitungsabschnitt 44 der Druckleitung 12 kein Druck aufbauen kann. Somit bleibt die Einspritzdüse 14 geschlossen, und es wird kein Reduktionsmittel in das Abgasrohr 4 zugeführt. Sobald von einem Steuergerät (nicht dargestellt) des Motors eine Zufuhr von Reduktionsmittel in das Abgasrohr 4 angefordert wird, wird die Stromzufuhr zur Spule 30 des Magnetventils 24 unterbrochen, woraufhin die Druckfeder 36 das Ventilglied 34 gegen den Ventilsitz 38 im Rückströmkanal 22 drückt und diesen verschließt, wie in Fig. 2 dargestellt. Wenn die Förderpumpe 8 bei geschlossenem Rückströmkanal 22 Reduktionsmittel aus dem Vorratsbehälter 6 in die Druckleitung 12 fördert, wie durch die Pfeile C und D in Fig. 2 dargestellt, baut sich in der Druckleitung 12 ein Druck auf, der beim Überschreiten des Öffnungsdrucks der Einspritzdüse 14 zu einer Zufuhr von Reduktionsmittel in das Abgasrohr 4 führt.

Die in das Abgasrohr 4 zugeführte Menge des Reduktionsmittels ergibt sich aus der Leistung der Förderpumpe 8, der Kennlinie der Einspritzdüse 14 sowie der Verschlussdauer des Rückströmkanals 22 und kann daher durch Veränderung des zuletzt genannten Parameters gesteuert werden.

Wenn zwischen der Förderpumpe 8 und der Einspritzdüse 14 ein zusätzlicher Druckregler (nicht dargestellt) vorgesehen ist, ergibt sich die in das Abgasrohr 4 zugeführte Menge des Reduktionsmittels aus dem am Druckregler eingestellten Druck und der Verschlussdauer des Rückströmkanals 22, so dass zur Steuerung der in das Abgasrohr 4 zugeführten Menge des Reduktionsmittels ebenfalls die Verschlussdauer des Rückströmkanals 22 verändert werden kann.

Da das Magnetventil 24 bzw. Komponenten des Magnetventils 24, wie die Spule 30, die Stromzuleitungen zur Spule 30 innerhalb des Gehäuses 26, sowie ggf. auch der Magnetanker 32 in der Regel chemisch nicht gegen Reduktionsmittel bzw. deren Bestandteile oder Zersetzungsprodukte beständig sind, ist eine vom Ventilglied 34 durchsetzte Stufenbohrung 46 zwischen dem Magnetventil 24 und dem Ventilsitz 38 des Rückströmkanals 22 durch eine elastisch verformbare Membran 48 flüssigkeits- und gasdicht verschlossen, um ein Eindringen von Reduktionsmittel oder Bestandteilen bzw. Zersetzungsprodukten desselben aus dem Rückströmkanal 22 in den Spulenraum 28 des Magnetventils 24 zu verhindern.

Dazu ist die ringförmige Membran 48 mit ihrem inneren Umfangsrand flüssigkeits- und gasdicht in eine umlaufende Nut im Umfang des Ventilglieds 34 eingebettet, während ihr äußerer Umfangrand flüssigkeits- und gasdicht zwischen einer Ringschulter der Stufenbohrung 46 und einer teilweise in die Stufenbohrung 46 ragenden Spulenhalterung 50 des Magnetventils 24 festgeklemmt ist. Die bei geschlossenem Rückströmkanal 22 unverformte Membran 48 wird elastisch verformt, wenn der Magnetanker 32 durch Stromzufuhr zur Spule 30 entgegen der Kraft der Feder 36 in Richtung der Längsachse L der Spule 30 verlagert und dabei das Ventilglied 34 vom Ventilsitz 38 abgehoben wird. Dabei wird jedoch der Ringspalt zwischen dem Ventilglied 34 und der Wand der Stufenbohrung 46 in jeder Ventilstellung des Ventilglieds 34 durch die Membran 48 hermetisch verschlossen.

Während die Förderpumpe 8, die Druckleitung 12, die Saugleitung 10, der Vorratsbehälter 6 und ein ggf. zwischen dem Vorratsbehälter 6 und der Förderpumpe 8 angeordneter Filter (nicht dargestellt) in bekannter Weise so ausgebildet sind, dass sie im Falle eines Gefrierens des in ihnen enthaltenen flüssigen Reduktionsmittels gegen den dadurch bewirkten Eisdruck beständig sind, wird eine Eisdruckbeständigkeit der in Fig. 2 dargestellten Zumesseinheit 16 dadurch erreicht, dass die durch die Zumesseinheit 16 verlaufenden Leitungsabschnitte 18 bzw. 20 der Druckleitung 12 und der Saugleitung 10 auf einem Teil ihrer Länge von röhrenförmigen Kompressionskörpern 52 umgeben sind. Die Kompressionskörper 52 sind elastisch verformbar, so dass sie bei einer Volumenvergrößerung des in der Zumesseinheit 16 enthaltenen flüssigen Reduktionsmittels infolge seines Gefrierens etwas zusammengedrückt werden und beim Auftauen des Reduktionsmittels wieder ihre ursprüngliche Form annehmen.

Da mit einer solchen Zumesseinheit 16 sämtliche Komponenten der Vorrichtung 2 eisdruckfest ausgebildet werden können, kann auf eine aufwändige Entleerung der Leitungen 10, 12 verzichtet werden. Außerdem werden Fehldosierungen vermieden, die sich infolge einer unvollständigen Entleerung der Leitungen 10, 12 ergeben können, da die in den Leitungen 10, 12 verbliebenen Restmengen des flüssigen Reduktionsmittels beim Entlüften der Leitungen 10, 12 zu ungewollten Fehlermengen und damit zu Abweichungen in der Bilanz des in das Abgasrohr 4 zugeführten Reduktionsmittels und folglich auch der gewünschten Dosierstrategie führen können.

Das für die Zumesseinheit 16 beschriebene Prinzip wird auch in der Einspritzdüse 14 angewandt, um diese eisdruckfest zu machen, indem innerhalb der Einspritzdüse 14 zumindest ein Teil der Druckleitung 12 von einem röhrenförmigen Kompressionskörper (nicht dargestellt) umgeben ist.

## Patentansprüche

1. Vorrichtung zur Zufuhr eines Reduktionsmittels in einen Abgasstrang einer Verbrennungskraftmaschine,
- mit einer Förderpumpe zur Förderung des Reduktionsmittels aus einem Vorratsbehälter in den Abgasstrang.
- wobei eine zwischen der Förderpumpe (8) und dem Abgasstrang (4) angeordnete Zumesseinrichtung (16) vorgesehen ist, die von der Förderpumpe (8) kontinuierlich gefördertes Reduktionsmittel zeitweilig in den Abgasstrang (4) zuführen kann, wobei die Zumesseinrichtung (16) eine Druckseite der Förderpumpe (8) wahlweise mit einer Saugseite der Förderpumpe (8) verbindet oder von der Saugseite trennt,
- ein Steuergerät vorgesehen ist zur Ansteuerung der Zumesseinrichtung,
- zwischen der Zumesseinrichtung (16) und dem Abgasstrang (4) eine Einspritzdüse (14) zum Eindüsen des Reduktionsmittels in den Abgasstrang (4) angeordnet ist, **dadurch gekennzeichnet, dass**
- das Steuergerät eingerichtet ist zu einer derartigen Ansteuerung der Zumesseinrichtung, dass im Falle einer erforderlichen Zufuhr von Reduktionsmittel in den Abgasstrang die Druckseite von der Saugseite getrennt wird, so dass der Druck des zur Einspritzdüse (14) zugeführten Reduktionsmittels zu einer Zufuhr von Reduktionsmittel in den Abgasstrang (4) führt, wobei
- die Zumesseinrichtung (16) entlang von einer Druckleitung (12) zwischen der Förderpumpe (8) und der Einspritzdüse (14) sowie entlang von einer Saugleitung (10) zwischen der Förderpumpe (8) und dem Vorratsbehälter (8) angeordnet ist, und wobei die Zumesseinrichtung (16) die Druckleitung (12) und die Saugleitung (10) wahlweise miteinander verbindet oder voneinander trennt.

2. Vorrichtung nach Anspruch 1, **dadurch gekennzeichnet, dass** die Zumesseinrichtung (16) einen die Druckleitung (12) und die Saugleitung (10) verbindenden Rückströmkanal (22) und ein steuerbares Ventil (24) zum Verschließen bzw. Öffnen des Rückströmkanals (22) umfasst.

3. Vorrichtung nach Anspruch 2, **dadurch gekennzeichnet, dass** das Ventil ein Magnetventil (24) ist und ein durch die Kraft einer Feder (36) beaufschlagte Ventilglied (34) aufweist, das den Rückströmkanal (22) in stromlosem Zustand des Magnetventils (24) verschließt.

4. Vorrichtung nach Anspruch 3, **gekennzeichnet durch** eine elastisch verformbare Membran (48), die eine vom Ventilglied (34) durchsetzte Öffnung (46) zwischen dem Magnetventil (24) und dem Rückströmkanal (22) um das Ventilglied (34) herum hermetisch verschließ.

5. Vorrichtung nach Anspruch 4, **dadurch gekennzeichnet, dass** die Membran (48) ringförmig ist, wobei sie entlang ihres inneren Umfangs flüssigkeitsdicht mit dem Ventilglied (34) und entlang ihres äußeren Umfangs flüssigkeitsdicht mit einer Begrenzungswand der Öffnung (46) verbunden ist.

6. Vorrichtung nach einem der vorangehenden Ansprüche, **dadurch gekennzeichnet, dass** die Druckleitung (12) und die Saugleitung (10) innerhalb der Zumesseinrichtung (16) mindestens teilweise von elastisch verformbaren Kompressionskörpern (52) begrenzt werden.

7. Vorrichtung nach einem der vorangehenden Ansprüche, **dadurch gekennzeichnet, dass** die Zumesseinrichtung (16) ein von der Förderpumpe (8) getrenntes Bauteil ist.

8. Vorrichtung nach einem der vorhergehenden Ansprüche, **dadurch gekennzeichnet, dass** die Einspritzdüse (14) mindestens einen elastisch verformbaren Kompressionskörper umfasst, der eine Leitung zur Zufuhr des Reduktionsmittels in den Abgasstrang (4) innerhalb der Einspritzdüse (14) mindestens abschnittsweise umgibt.

## Claims

1. Device for supplying a reducing agent into an exhaust section of an internal combustion engine,
- having a feed pump for feeding the reducing agent from a storage tank into the exhaust section,
- with a metering device (16) being provided which is arranged between the feed pump (8) and the exhaust section (4) and by means of which reducing agent which is fed continuously by the feed pump (8) can be supplied intermittently into the exhaust section (4), with the metering device (16) selectively connecting a pressure side of the feed pump (8) to a suction side of the feed pump (8) or separating said pressure side from the suction side,
- a control unit is provided for actuating the metering device,
- an injection nozzle (14) for injecting the reducing agent into the exhaust section (4) is arranged between the metering device (16) and the exhaust section (4),
**characterized in that**
- the control unit is set up to actuate the metering device in such a way that, if a supply of reducing agent into the exhaust section is required, the pressure side is separated from the suction side such that the pressure of the reducing agent supplied to the injection nozzle (14) leads to a supply of reducing agent into the exhaust section (4),
- with the metering device (16) being arranged along a pressure line (12) between the feed pump (8) and the injection nozzle (14) and along a suction line (10) between the feed pump (8) and the storage tank (6), and with the metering device (16) selectively connecting the pressure line (12) and suction line (10) to one another or separating said pressure line (12) and suction line (10) from one another.

2. Device according to Claim 1, **characterized in that** the metering device (16) comprises a return flow duct (22), which connects the pressure line (12) and the suction line (10), and a controllable valve (24) for closing off and opening the return flow duct (22).

3. Device according to Claim 2, **characterized in that** the valve is a solenoid valve (24) and has a valve member (34) which is loaded by the force of a spring (36) and which closes off the return flow duct (22) when the solenoid valve (24) is in the currentless state.

4. Device according to Claim 3, **characterized by** an elastically deformable diaphragm (48) by means of which an opening (46), through which the valve member (34) extends, between the solenoid valve (24) and the return flow duct (22) is hermetically closed off around the valve member (34).

5. Device according to Claim 4, **characterized in that** the diaphragm (48) is of annular shape, with said diaphragm (48) being connected in a liquid-tight manner along its inner circumference to the valve member (34) and being connected in a liquid-tight manner along its outer circumference to a boundary wall of the opening (46).

6. Device according to one of the preceding claims, **characterized in that** the pressure line (12) and the suction line (10) are delimited within the metering device (16) at least partially by elastically deformable compression bodies (52).

7. Device according to one of the preceding claims, **characterized in that** the metering device (16) is a component which is separate from the feed pump (8).

8. Device according to one of the preceding claims, **characterized in that** the injection nozzle (14) comprises at least one elastically deformable compression body which surrounds a line for supplying the reducing agent into the exhaust section (4) within the injection nozzle (14) at least in sections.

## Revendications

1. Dispositif pour acheminer un agent réducteur dans une branche de gaz d'échappement d'un moteur à combustion interne,
- comprenant une pompe de refoulement pour refouler l'agent réducteur hors d'un réservoir dans la branche de gaz d'échappement,
- un dispositif de dosage (16) disposé entre la pompe de refoulement (8) et la branche de gaz d'échappement (4) étant prévu, lequel peut acheminer l'agent réducteur refoulé en continu par la pompe de refoulement (8) temporairement dans la branche de gaz d'échappement (4),
- le dispositif de dosage (16) reliant un côté pression de la pompe de refoulement (8) de manière sélective à un côté aspiration de la pompe de refoulement (8) ou le séparant du côté aspiration,
- un appareil de commande étant prévu pour commander le dispositif de dosage,
- entre le dispositif de dosage (16) et la branche de gaz d'échappement (4) étant disposée une buse d'injection (14) pour injecter l'agent réducteur dans la branche de gaz d'échappement (4),
**caractérisé en ce que**
- l'appareil de commande est prévu pour effectuer une commande du dispositif de dosage de telle sorte que dans le cas d'une alimentation requise en agent réducteur dans la branche de gaz d'échappement, le côté pression soit séparé du côté aspiration, de sorte que la pression de l'agent réducteur acheminé à la buse d'injection (14) conduise à une alimentation en agent réducteur dans la branche de gaz d'échappement (4),
- le dispositif de dosage (16) étant disposé le long d'une conduite de pression (12) entre la pompe de refoulement (8) et la buse d'injection (14) et le long d'une conduite d'aspiration (10) entre la pompe de refoulement (8) et le réservoir (8), et le dispositif de dosage (16) reliant la conduite de pression (12) et la conduite d'aspiration (10) de manière sélective l'une à l'autre ou les séparant l'une de l'autre.

2. Dispositif selon la revendication 1, **caractérisé en ce que** le dispositif de dosage (16) comprend un canal de reflux (22) reliant la conduite de pression (12) et la conduite d'aspiration (10) et une soupape commandable (24) pour fermer ou ouvrir le canal de reflux (22).

3. Dispositif selon la revendication 2, **caractérisé en ce que** la soupape est une électrovanne (24) et présente un organe de soupape (34) sollicité par la force d'un ressort (36), qui ferme le canal de reflux (22) dans l'état non alimenté en courant de l'électrovanne (24).

4. Dispositif selon la revendication 3, **caractérisé par** une membrane déformable élastiquement (48), qui ferme une ouverture (46) traversée par l'organe de soupape (34) entre l'électrovanne (24) et le canal de reflux (22) de manière hermétique tout autour de l'organe de soupape (34).

5. Dispositif selon la revendication 4, **caractérisé en ce que** la membrane (48) est annulaire, et elle est connectée le long de sa périphérie intérieure de manière étanche aux fluides à l'organe de soupape (34) et le long de sa périphérie extérieure de manière étanche aux fluides à une paroi de limitation de l'ouverture (46).

6. Dispositif selon l'une quelconque des revendications précédentes, **caractérisé en ce que** la conduite de pression (12) et la conduite d'aspiration (10) sont limitées à l'intérieur du dispositif de dosage (16) au moins en partie par des corps de compression déformables élastiquement (52).

7. Dispositif selon l'une quelconque des revendications précédentes, **caractérisé en ce que** le dispositif de dosage (16) est un composant séparé de la pompe de refoulement (8).

8. Dispositif selon l'une quelconque des revendications précédentes, **caractérisé en ce que** la buse d'injection (14) comprend au moins un corps de compression déformable élastiquement, qui entoure au moins en partie une conduite pour l'alimentation en agent réducteur dans la branche de gaz d'échappement (4) à l'intérieur de la buse d'injection (14).
